# EUROPEAN PATENT SPECIFICATION

(11) **EP 0 733 529 B1**
(45) Date of publication and mention of the grant of the patent: **15.03.2000**
(21) Application number: 95933440.0
(22) Date of filing: 06.10.1995
(51) Int. Cl.: B60S 3/04

(54) **CENTERS FOR THE WASHING OF MACHINERY**
WASCHANLAGE FÜR MASCHINENREINIGUNG
CENTRES DE LAVAGE DE MACHINES

(30) Priority: 06.10.1994 ES 9402094
(43) Date of publication of application: 25.09.1996
(73) Proprietor: Comez de Sebastian, Fernando, 08190 Sant Cugat del Vallès (ES)
(72) Inventor: Comez de Sebastian, Fernando, 08190 Sant Cugat del Vallès (ES)
(74) Representative: Maldonado Jordan, Julia
(86) International application number: PCT/ES95/00110
(87) International publication number: WO 96/11127

(56) References cited:
- CH-A- 456 365
- DE-A- 1 455 518
- DE-A- 3 814 726
- GB-A- 2 137 149

## Description

### OBJECT OF THE INVENTION

This invention refers to a compact plant destined for washing machinery, whether mobile, like for example vehicles, or static, like for example that installed in an industrial plant.

### BACKGROUND TO THE INVENTION

Centres and installations for washing machinery as is the case of car wash tunnels, at the present need a considerable space owing to the combination of detergents and waters they use and the layout of the corresponding feed lines.

This need means that these centres for washing machinery cannot be installed in all the premises that wish to have them. The current nature of these washing centres also restricts their use and therefore, for example, the car wash tunnel is not the best place for washing a motorcycle.

CH-A-456365, which is the closest prior art corresponding to the preamble of claim 1, discloses a self-service washing plant comprising an engine room in a compact form prepared to serve two independent wash places, containing a hot water tank, a cleaning agent tank, two pressure pumps each of them driven by an electric motor, and means to deliver said cleaning agent to said hot water. A surrounding wall houses said engine room and supports some external elements including a rotating arm from which hangs a high pressure hose ending in a hand jet from whose nozzle come the washing waters. Buttons are provided in said hand jet in order an user after introducing a coin in a slot device can select two types of water prepared to meet corresponding stages of washing and in fact fresh water and water with said cleaning agent coming from said hot water tank.

This antecedent is limited in the fact of the number of places to serve, number of stages of washing foreseen, no provision of means to treat the incoming water and in that the user is obliged to select from the hand jet each of the waters for the different stages.

### DESCRIPTION OF THE INVENTION

In order to overcome these problems, the compact plant has been designed to be used as the centre for washing machinery, whether automobile or static but displaceable, which includes a small engine room with an approximate dimension of 1.5 metres wide, 2.5 metres long and 2.25 metres high, inside of which different elements such as the following are housed: pressure pumps, electric motors, a diesel boiler, a hot water accumulator, a plant for osmotizing water, an electronic control unit, an electric switch cupboard, fuel tanks, osmotized water tank, dosing pumps and auxiliary material. The osmotization will consist of a process in which the water is first micro-filtered so as to remove particles greater than 80 microns, then it is delimed, then de-chlorated, and after that It Is micro-filtered again in order to eliminate particles greater than five microns, and finally It is passed through the osmosis membrane container torpedo.

The hot washing water is filtered through 80 micron filters and cationic exchangers and is stored in its own tank so that it is immediately available and when the user needs it comes out under pressure through a hose and reaches a hand jet. For rinsing, water from the mains supply is passed through the aforementioned 80 micron filters and cationic exchangers, after which it is pumped to the high pressure jet nozzle. In the hot water washing stage deionised water comes out with a pre-established dose of detergent, the output pressure is some 90 bars and its temperature some 60°C. This hot, pressurised solution emulsifies the dirt. In the following stage, which is rinsing, micro-filtered, delimed water comes out of the jet nozzle, at the same pressure as before but at ambient temperature. In a third stage, osmotized water, free of impurities and physio-chemical elements will come out of the nozzle, this gives it a high superficial tension which means it wets the surface of the machine very little. This causes the effect that it is drained very quickly and does away with the need to dry mechanically or by hand. This osmotized water removes the latter which was wetting the surface of the machine, leaving it dry and shiny.

The quality of the wash process is obtained thanks to the combination of several factors which are provided by the aforementioned elements. On the one hand Is the fact of working with a suitable pressure at the jet nozzle. On the other is the temperature of 60°C at the point of contact with the surface to be washed. Finally it is Important that the waters used at each one of the washing stages are treated in order to meet with the special function.

### DESCRIPTION OF THE DRAWINGS

In order to complement the description made and with the object of providing a better understanding of the characteristics of the invention, this specification is accompanied by a set of drawings, as an integral part thereof where a preferable embodiment of the following elements has been shown as a non limiting illustration.

In said drawings:
Figs. 1a to 1c show a schematic view of the compact plant which contains the machines needed In order to provide the washing waters;
Figs. 2a and 2b show a detailed elevation view of the pressure pumps installation and its corresponding attachments, including in this Example 4 pumps;
Fig. 3 shows the structure of the frames of each one of the six walls which limit the housing enclosing the plant.

### DETAILED DESCRIPTION OF THE INVENTION

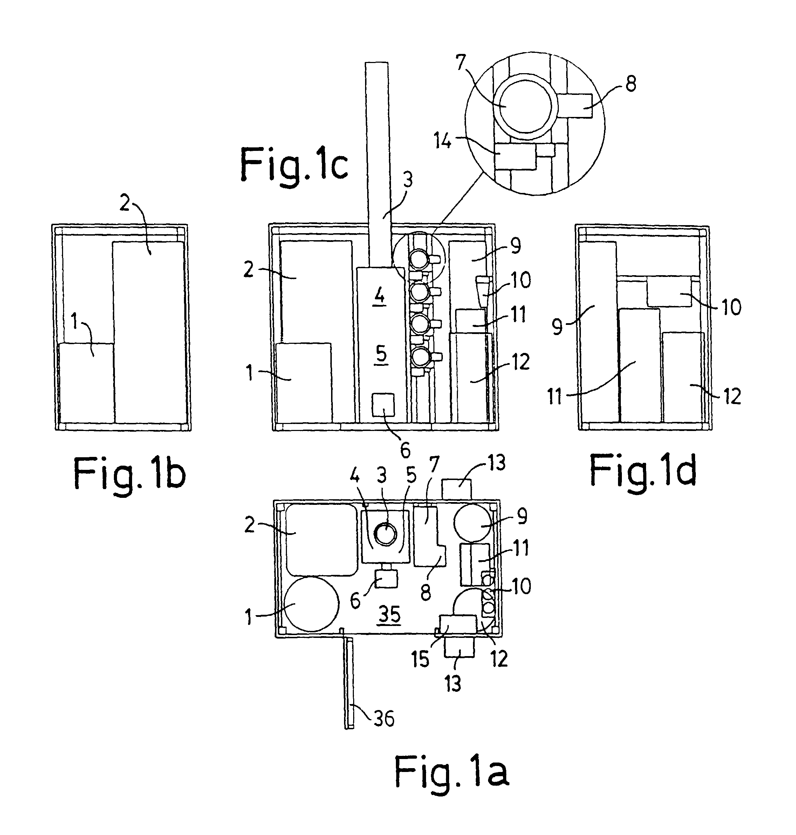

In Figs. 1a - 1c, the element marked with number 1 is a diesel tank, 2 an osmotized water tank, 3 a chimney for the evacuation of combustion gases, 4 a hot water accumulator, 5 a boiler, 6 a burner, 7 shows any of the four possible electric motors that the compact plant can house associated to a corresponding pressure pump 8, which also has adjoined a dosing pump 14 for detergent to be injected into the output water in the first stage of the wash. With 9 is indicated the place for the two parallel cationic exchangers, 10 shows the place for the water intake filters, 11 is the osmosis plant and 12 is a salts tank. An electronic coin slot device 13 has been provided in order the user pays for using the service given by the plant and can select the desired wash option. A switch cupboard 15 houses an electric switchboard and a control unit.

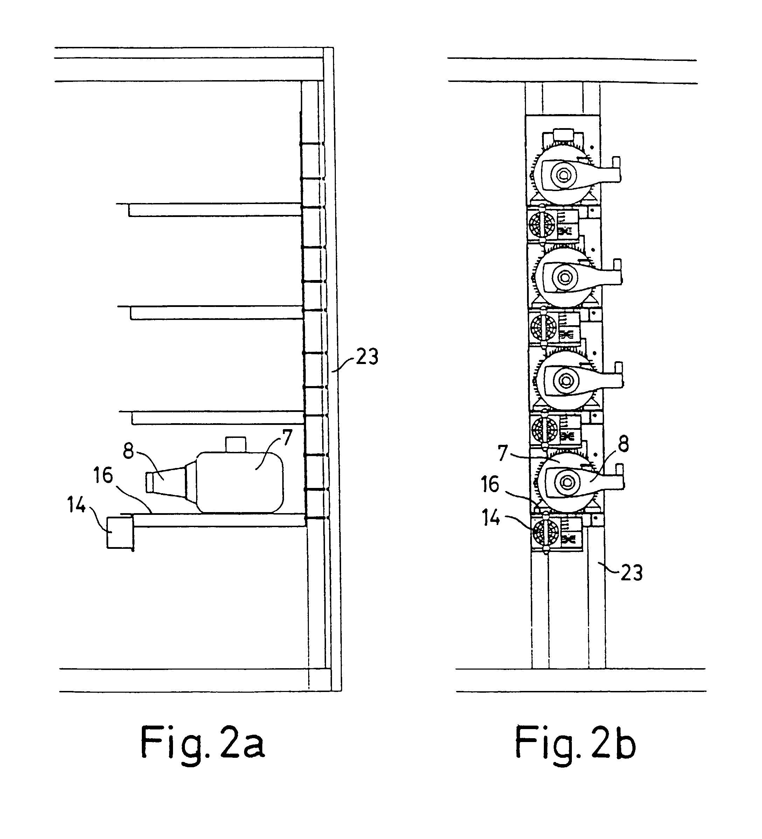

As previously indicated Fig. 2 shows the pressure pumps units and its corresponding attachments, Including four units each comprising an electric motor 2 to drive a pressure pump 3, having adjoined a detergent dosing pump 14 and each of said units being placed on a removable tray 16.

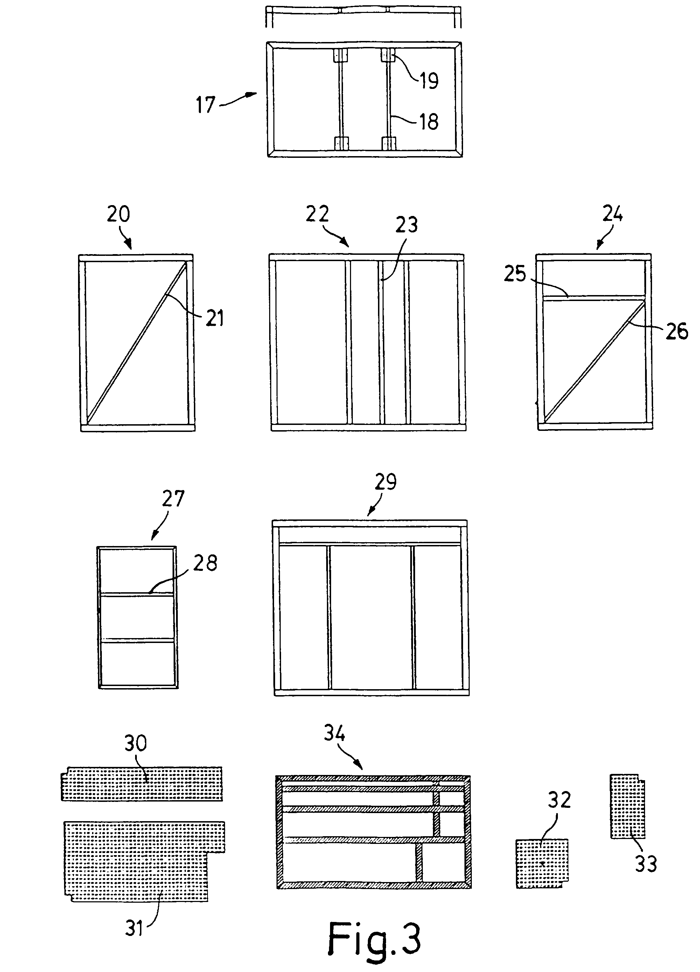

With regard to Fig. 3, 17 is the frame corresponding to the ceiling part of the housing enclosing the plant, provided with two stays 18, with a flatbar 19 attached at the ends thereof, each flatbar 19 including two or four holes. These perforated flatbars 19 have a double function: one is to act as the place for fitting other flatbars (not Illustrated) which will help in holding the whole engine room 35 or plant in order to raise It for movement; the other function envisaged is for, when the move is completed and the additional flatbars have been removed, the stay flatbars (19) in the ceiling will be used as the place for holding an upper tubular structure. The frames of the short side walls are 20 and 24, the first one having a diagonal reinforcement stay 21 and the second a horizontal stay 25 (which will be used to hold the filters 10 to mains supply water intake) extended in a diagonal reinforcement stay 26. The frames of the long side walls are indicated by 22 and 29 the first having several vertical stays 23, the two right-hand of them (as illustrated in the drawing) being envisaged for holding the removable trays 16 which carry the pressure pumps and their attachments, as described In Figs. 2a and 2b. The number 27 shows the frame of the entrance door wing, reinforced by two cross-members 28, and which is located on the second long wall frame 29. Numerals 30-33 correspond to the four pieces of metallic paving for the housing (enclosing the plant) which can be adapted to the reinforced structure 34 of the lower face or base of said housing. This lower face of the housing is reinforced by several stays with a strong mechanical resistance as it is envisaged that they may support the weight of the whole installation in the cases in which it has to be lifted and transported by a crane.

A particular preferred embodiment of the invention is destined to washing, by means of prior payment in coins, of motor vehicles or their trailers such as cars, motorcycles, lorries, coaches, boats, bicycles, caravans. It is installed on a chosen land and is made up of an engine room 35, a structure, exterior Image, coin slot device 13 and a number (from one to four) of rotating arms, with a pressure hose hanging from the end of each one connected at the end to a diffuser jet.

Housed Inside the engine room 35 there are:
- a heating system for the Inner engine room 35 so as to prevent the fluids inside from freezing when the ambient temperatures may cause this;
- a fluid emptying system of the pipes which are subject to the risk of freezing;
- some pressure pumps 8 (from one to four, with ceramic pistons and stainless steel heads laid out in parallel, stacked (see Figs. 2 and 2a), placed on removable stainless steel trays 16;
- some electric motors 7 (as many as pressure pumps 8) 2.2 kw in power, each one driving the corresponding pressure pump 8;
- some detergent dosing pumps 14 (as many as pressure pumps 8), adjustable, and of a high precision which inject a dose of detergent into the water in the first stage of the wash. A conventional solenoid valve allows the dosing pump 14 to feed the hot water circuit with the preestablished dose of detergent for that first stage of the wash;
- at the intake of each pressure pump 8 there is a manifold (not illustrated) with four inlets:
   - one of them acts during the first stage of the wash, when the dirt is emulsified, and it has the purpose of allowing the passage of delimed water with the preestablished dose of detergent;
   - a second inlet acts during the second stage of the wash, rinsing and allows the passage of the delimed ambient temperature water;
   - a third inlet acts during the third stage of the wash, the shining, and allows the passage of the osmotized ambient temperature water; and
   - a fourth inlet is used for purging the excess pump output pressure, which may be caused by fortuitous reasons like for example, the pinching of the hose, and has a conventional pressure valve; the purge in these cases opens the pressure valve where water comes out taking it to the pump feed pipe, so that a circuit is closed with no loss of liquid nor excess pressure in the areas from the valve to the point of blockage;
   each one of the first to the third inlets has its corresponding zero pressure solenoid valve and each solenoid valve is in turn complemented with a directional or non-return valve whose purpose is to prevent the return of undesired liquids through the solenoid valve, as without this precaution a washing liquid would mix with any of the others by return;
- a stainless steel pressure-stat valve with the aim of suspending the working of the whole plant when the mains water intake pressure does not reach the minimum required;
- a water heating system made up of a column, in the base of which a boiler 5 and burner 6 are housed, and supported by the top is the hot water accumulator 4 with its thermostat and manometer controls; this layout allows a high heating performance;
- a water treatment plant: the water from the place where the Installation is located must be analyzed previously and the physio-chemical characteristics of the treatment will be adjusted, according to usual practice in the current state of water treatment techniques, to the maximum and minimum limits of content in salts, organic substances, gases, particles in suspension or gelled, etc. so as to provide final water which will always have the necessary technical characteristics described here; the plant is made up of a first 80 micron membrane filter for filtering solid particles; next the water passes through another filter which will have the aim of removing the turbidity and which is made up of several layers of different minerals capable of retaining particles of a size up to 10 microns; the water then passes through two active carbon filters and then through a filter which removes particles of a size greater than 5 microns, finally the water passes through the inverse osmosis filters which are necessary according to the nature of the water In the locality, in order to reduce the conductivity to an approximate value of 10 micro-siemens. The water obtained in this way is, then, free from particles, deionised, with a hardness which should not be greater than 5° French degrees and a conductivity of approximately 10 micro-siemens. The water which must pass through the osmosis membranes will be previously heated to a preestablished temperature so as to guarantee the osmotization performance;
- a clock which at a preestablished time will stop the osmosis plant 11 and will activate the regeneration of ion exchanger resin;
- a salt-brine tank 12 for regenerating the ion exchanger resin;
- a motor which will pump the brine through the columns 9 where the ion exchanger resin is located;
- a switch cupboard 15 where a control unit is housed with the option of output by modem, which controls and regulates the whole plant; the electrical system is conceived and designed so that it operates individually for each one of the washing areas, whose number in this specific example may be up to four, so that each area can be at a different washing stage and also any fault will be individualised from the rest; the control unit is equipped with an RS 232 interface board for entering the desired programs, which will at least be three: the first and fundamental one is the integral management of the plant and each one of the washing areas, a second one will be control and alarm to warn of faults, breakdowns or low levels of storage of consummable liquids under the preestablished minimum, a third program will be communication via modem for transmitting and receiving remote data and instructions, and which will allow remote control of takings, times of stoppage, maintenance, price changes per service, statistics, etc; these three functions ensure the maximum reliability and functionality of the washing centre;
- a safety alarm which is operated when unauthorised persons open the door to the housing or the coin-slot device;
- a music generator which will entertain and eliminate any possible feeling of loneliness or isolation for the user, especially when the installation is away from the main building.

The external front of the switch cupboard 15 will house the individual service counters for each one of the washing areas, as well as for the other external service machinery which may exist, for example vacuum cleaners for cleaning the passenger compartment of closed vehicles as in the case of cars, caravans or lorries.

At the top of the front of the plant, an alarm light will be placed which will be activated by the internal control unit when a fault, breakdown or critical reduction in the levels of the consumable fluids is detected.

This preferential embodiment is built in foam polyurethane sandwiched In heat-lacquered steel which provides soundproofing and thermal insulation.

The box model structure, which is the one which offers ceiling and walls to the vehicle to be washed, is made of treated steel and, in order to give the desired image, it will all be hidden by the finishing elements the owner or person offering the service wishes. Each one of the washing areas, where there is a jet and drainage, has a false ceiling made of interlocking PVC profiles fitted to the front canopy, on whose surface two luminous, fluorescent anti-damp tube screens are housed for night lighting.

The facade or front canopy is preferably made of translucid polycarbonate with an adhesive strip in coloured vinyl, which allows the service offered to be personalised with the desired image.

The separations between the washing areas will be made of polycarbonate sheets, assembled together with lacquered aluminium profiles.

In the geometric centre of the ceiling of each washing place there is a rotating arm made of stainless steel. The hose which carries the pressurised washing water goes to this arm. From the rotating arm hangs a piece of hose at the end of which is the jet, which is made of stainless steel and according to the ergonomic regulations of use in order to ease the way of grasping it and comfortable use. The jet's nozzle does not have a brush and is made of ceramics, which provides advantages like minimum wear and open form in order to supply a jet under open pressure in a slight fan.

The support which houses each jet is made of stainless steel and forms an open U-shape at the top, which allows the jet to be grasped and left.

The option for washing lorries and coaches has the rotating arm articulated into two arms, made of treated steel, painted with epoxy resin. These arms hang from the top of a six metre high post which provides the rotation radius necessary for comfortable washing.

The micro-filtered, delimed hot water and osmotized water tanks ensure immediate delivery of these liquids.

The coin slot device 13 is of multi-coin and accumulative type and has some buttons for selecting the washing option desired. It is designed to accept up to six different types of coin or token. It can be programmed easily in order to deal with changes to other types of coin, as in the case of the appearance of new coins or when installed in different countries. The slot device 13 can be equipped with a set of micro-switches in order to control the duration of the metering units on the counter and therefore the cost of the service.

When dealing with upper tubular structure models without a ceiling or walls housing the washing area, or the canopy model which has a protective ceiling over the washing area, the slot device 13 is installed on the external wall of the engine room 25. When dealing with the box model, the slot device 13 can also be placed on the dividing wall between two washing areas. In the tubular mast structure where the engine room 35 is at a distance from the washing area and they have the rotating arm hanging from an arm fixed to an isolated mast, the slot device 13 is installed on the aforementioned mast. The slot device 13 is made of stainless steel, and is made up of two bodies with independent access. The first one is located at the top and houses the electronic coin counter system, as well as the buttons for selecting each one of the washing process options. The second body is located at the bottom and houses the box where the coins inserted are deposited; the type of construction and locking system of this element are designed like a safe. The lower body or coin box is removable for custody during periods when the installation is not operative, so as to protect the slot device 13 from possible deterioration through robbery attempts.

The detergent used in the washing stage in order to emulsify the dirt has an approximate compound of 5% potassium bleach, 10% triazine, 20% ethylene glycol, 30% triethylamine and 35% tri-ethylamin chloride.

The terms In which this specification has been written should always be taken in the widest and non-limiting sense.

The materials, shape and layout of the elements are subject to variation whenever this does not mean an alteration to the essential characteristics of the invention which is claimed as follows:

## Claims

1. A compact plant for washing machinery, comprising:
an engine room (35) in a compact form containing a hot water tank, a cleaning agent tank, a pressure pump driven by an electric motor, and means to deliver said cleaning agent to said hot water;
a structure which houses said engine room and supports partly or totally the external structures for carrying out the washing;
some external elements fixed to said external structures including a rotating arm from which hangs a high pressure hose, a jet assembled to said hose, from whose nozzle come the washing waters and a coin slot device (13), and
means for delivering through said jet at least two selected types of water prepared to meet corresponding stages of washing,
**characterised** in that
said device (13) is an electronic coin slot of the multi-coin accumulative type which includes several buttons in order to enable a user to select the washing service desired, including four different stages of washing which are pre-wash, wash, rinsing and shining-drying;
means are provided in said engine room (35) to filter, purify and prepare the water from the mains supply so as to meet said four different stages of washing;
said engine room (35) includes means enabling to deal with four independent wash areas; and
said engine room (35) has associated a switch cupboard (15) which houses an electronic control unit which operates individually for each one of said independent washing areas.

2. A compact plant, according to claim 1, characterised in that said electronic control unit is equipped with an RS 232 interface card for transmitting and receiving data and instructions.

3. A compact plant, according to claim 2, characterised in that said electronic control unit manages the working of each one of the internal and external elements of said engine room (35) and controls break-downs, faults and levels of consumable liquids.

4. A compact plant, according to claim 3, characterised in that said electronic control unit carries out at least one of the following operations:
manages the working of each one of the elements of said engine room (35), counts the number of metering units paid in any of said four wash areas, administrates fault alarms which correspond to said wash areas, reacts when an alarm signal reaches it, and
in that said electronic control unit is equipped with a modem in order to receive new instructions about the prices of the service, sending data accumulated since a previous report or since a specific data.

5. A compact plant, according to claim 1, characterised in that said engine room (35) includes four compact pressure units, each of them comprising a pressure pump (8) associated to a corresponding electric driving motor (7), a flow regulator and a detergent dosing pump (14) for the detergent needed to the wash stage, with the necessary connections among said devices.

6. A compact plant, according to claim 5, characterised in that each of said compact pressure units (7, 8, 14) is placed on a single removable tray (16) and in that said trays (16) are laid out in parallel, stacked.

7. A compact plant, according to claim 1 characterized in that said engine room (35) is located inside a cubic housing, whose floor as well as the joints between the floor and walls and walls and ceiling make up a solidly joined unit.

8. A compact plant, according to claim 7 characterised in that the ceiling of said cubic housing has a frame provided with four flatbars, each one with two or four holes providing anchorage point so as to raise the whole cubic housing to move the plant to a desired location.

9. A compact plant, according to claim 7 characterized in that said cubic housing has a door (36) with a lock, internal lighting and enough free space inside for the presence of at least two people.

10. A compact plant, according to claim 7 characterized in that the engine room (35) is contained in a construction of 9 cubic metres or less, laid out on a rectangular floor of approximately 1.5 metres by 2.5 metres.

11. A compact plant, according to claim 5, characterised in that the intake of each pressure pump (8) has a manifold with at least four inlets each of them equipped with a flow regulator and complemented with a directional or non-return valve and in that the measurement of the flow to the manifold of each one of the pressure pumps is commanded by a conventional solenoid valve, a tap operated by an electric motor or a pneumatic valve commanded by a solenoid valve.

12. A compact plant according to claim 11, characterized in that
- a first of said manifold inlets operates during a washing stage, with the aim of allowing the passage of hot delimed water with a preestablished dose of detergent;
- a second inlet operates during a rinsing stage, with the aim of allowing the passage of micro-filtered, delimed water at a temperature according to that of the engine room (35);
- a third inlet operates during another washing stage with the aim of allowing the passage of osmotized water at ambient temperature;
- a fourth inlet is connected by means of a pressure hose to a pressure pump's (8) output pipe, and has a conventional pressure valve, in order to purge the excess pump output pressure, which can arise for accidental reasons.

13. A compact plant, according to claim 8, characterized in that the engine room (35) contains one or several of the following elements: a diesel tank (1), an osmotized water tank (2), a chimney (3) for the evacuation of gasses, a hot water accumulator (4), a boiler (5), a burner (6), a heat exchanger, an electric motor (7), a pressure pump (8), two cationic exchangers (9), an anionic exchanger, a water intake filter (10), a pressure-stat valve at the mains supply water input, an osmosis plant (11), a salts tank (12), a detergent dosing pump (14), an electric switchboard and control unit housed in a switch cupboard (15).

14. A compact plant, according to claim 13, characterized in that if further includes a safety burglar alarm.

15. A compact plant, according to claim 13 characterized in that it further includes a music generator.

16. A compact plant, according to claim 13, characterized in that it further comprises a heating system inside the engine room (35) and a fluid emptying system in the pipes or hoses which are subject to the risk of freezing.

17. A compact plant, according to claim 13 characterised in that it further comprises an access hatch to the water supply box, electric cable box and drains.

18. A compact plant, according to claim 1 characterised in that the engine room (35) is adjoining or away from the washing area and in that the engine room (35) is communicated with the washing area by means of hoses capable of transporting water under a pressure of between 50 and 110 bars and at a temperature of between 40 to 90°C, said hoses ending in an ergonomic jet.

19. A compact plant according to claim 1 characterized in that said engine room (35) includes a timer clock for controlling the working of some of the elements installed inside it.

20. A washing centre, comprising a compact plant according to any of the claims 1-19 characterised in that its washing areas are constructed according to one or several of the following alternatives: areas without ceilings or walls, served by a hose which comes from a tubular structure fastened to the ceiling of the engine room (35); areas with ceiling but without walls, served by a hose which comes from the ceiling; areas with ceiling and walls, served by a hose which comes from ceiling; areas away from the engine room (35) and equipped with a 2 to 6 metre high mast, the top of which has a fixed elevated arm from which the service hose comes.

21. A washing centre according to claim 20 characterized in that the service use time is regulated by means of a manual micro-switch system inside the coin slot device (13) or by means of an electronic program recorded in the control unit inside the engine room (35).

22. A washing centre according to claim 20 or 21, characterized in that the machinery washing stage uses a detergent composed of approximately 5% potassium bleach, 10% triazine, 20% ethylene glycol, 30% triethylamine and 35% tri-ethylamin chlorine.

## Patentansprüche

1. Kompaktanlage zur Reinigung von Maschinen, die folgende Elemente umfaßt:
einen Raum (35) für Kompaktgeräte, der einen Tank für warmes Wasser enthält, einen Tank mit einem Reinigungsmittel, eine elektrisch betriebene Druckpumpe sowie Vorrichtungen, um dem warmen Wasser das Reinigungsmittel zuzuführen;
einen Aufbau, in dem sich der genannte Raum befindet und an dem die externen Reinigungsvorrichtungen teilweise oder vollständig angebracht sind;
externe Elemente, die an den erwähnten äußeren Reinigungsvorrichtungen befestigt sind; diese Elemente umfassen einen Rührarm, an dem ein Hochdruckschlauch befestigt ist, ein an den genannten Schlauch angebrachtes Mundstück, über dessen Düse das Waschwasser zugeführt wird, und eine durch den Einwurf von Geldstücken betriebene Vorrichtung (13), sowie
Hilfsmittel, um über dieses Mundstück zwei verschiedene Waschwasserarten zuführen zu können, die den jeweiligen Waschstufen entsprechen;
die Anlage zeichnet sich dadurch aus, daß
die genannte Vorrichtung (13) eine elektronische Vorrichtung ist, die durch den Einwurf einzelner oder mehrerer Geldstücke in Betrieb gesetzt wird und mehrere Druckknöpfe umfaßt, um dem Bediener die Wahl des gewünschten Reinigungsbetriebs zu ermöglichen, wobei vier verschiedene Waschstufen zur Verfügung stehen: Vorwaschen, Hauptwaschen, Spülen und Polieren-Trocknen;
im genannten Geräteraum (35) sind Hilfsmittel zum Filtern, Reinigen und zur Präparation des Leitungswassers angebracht, um es für die vier verschiedenen Waschstufen zu präparieren;
der genannte Geräteraum (35) weist außerdem Hilfsmittel auf, die eine Reinigung in vier voneinander unabhängigen Waschbereichen ermöglichen;
der Geräteraum (35) ist an einen elektrischen Schaltschrank (15) angeschlossen, in dem sich das elektronische Steuergerät befindet, das für jede dieser voneinander unabhängigen Waschbereiche gesondert funktioniert.

2. Kompaktanlage, wie im Patentanspruch 1 beschrieben, die sich dadurch auszeichnet, daß das genannte Steuergerät mit einer RS-232-Schnittstellenkarte zur Übertragung und zum Empfang von Daten und Befehlen ausgestattet ist.

3. Kompaktanlage, wie im Patentanspruch 2 beschrieben, die sich dadurch auszeichnet, daß das genannte elektronische Steuergerät den Betrieb der einzelnen internen und externen Bauteile des genannten Geräteraums (35) steuert und Pannen, Störungen und die Flüssigkeitspegel kontrolliert.

4. Kompaktanlage, wie im Patentanspruch 3 beschrieben, die sich dadurch auszeichnet, daß das genannte elektronische Steuergerät mindestens eine der folgenden Operationen ausführt:
es steuert den Betrieb aller Elemente des genannten Geräteraums (35), es zählt die Anzahl der bezahlten Waschoperationen in den genannten vier Waschbereichen, es verwaltet die Störmeldungen, die in den genannten Waschbereichen aufgetreten sind, es reagiert auf eine eingegangene Warnmeldung und
dieses elektronische Steuergerät ist mit einem Modem ausgerüstet, um neue Befehle bezüglich der Preise der einzelnen Reinigungsdienste zu empfangen und um die seit dem jeweils letzten ausgegebenen Bericht angefallenen Daten sowie spezielle Datensätze abzusenden.

5. Kompaktanlage, wie im Patentanspruch 1 beschrieben, die sich dadurch auszeichnet, daß der genannte Geräteraum (35) vier kompakte Druckvorrichtungen enthält, die jeweils eine an einen entsprechenden Elektromotor (7) angeschlossene Druckpumpe (8), einen Wassermengenregler und eine Waschmitteldosierpumpe (14) für die Zufuhr des im jeweiligen Waschgang notwendigen Waschmittels enthalten sowie die für dieses Vorrichtungen notwendigen Anschlüsse.

6. Kompaktanlage, wie im Patentanspruch 5 beschrieben, die sich dadurch auszeichnet, daß jedes einzelne der kompakten Druckgeräte (7, 8, 14) sich auf einem abmontierbaren Tablett (16) befinden und daß diese Tabletts (16) als Parallelstapel angebracht sind.

7. Kompaktanlage, wie im Patentanspruch 1 beschrieben, die sich dadurch auszeichnet, daß der genannte Geräteraum (35) innerhalb einer kubischen Ummantelung angebracht ist, deren Boden und Verbindungen zwischen dem Boden und den Wänden sowie zwischen den Wänden und der Decke eine fest verbundene Einheit bilden.

8. Kompaktanlage, wie im Patentanspruch 7 beschrieben, die sich dadurch auszeichnet, daß die Decke der genannten kubischen Ummantelung über einen Rahmen mit vier Befestigungsplatinen verfügt, die jeweils zwei oder vier Bohrungen aufweisen, die als Verankerungspunkte dienen und somit ermöglichen, daß die kubische Ummantelung als ganze angehoben und somit die Anlage an einen gewünschten Ort verbracht werden kann..

9. Kompaktanlage, wie im Patentanspruch 7 beschrieben, die sich dadurch auszeichnet, daß die genannte kubische Ummantelung über eine abschließbare Tür (36), Innenbeleuchtung und einen ausreichenden Innenraum für die Anwesenheit von zwei Personen verfügt.

10. Kompaktanlage, wie im Patentanspruch 7 beschrieben, die sich dadurch auszeichnet, daß der Geräteraum (35) sich innerhalb eines bis zu 9 Kubikmetern großen Aufbaus befindet, der auf einem rechteckigen Grundriß von circa 1,5 mal 2,5 Metern steht.

11. Kompaktanlage, wie im Patentanspruch 5 beschrieben, die sich dadurch auszeichnet, daß jede einzelne der Druckpumpen (8) über einen Wassersammler verfügt, der mindestens vier Eingänge aufweist, die jeweils über einen Flußregler und über ein Einweg- bzw. Antirückflußventil verfügen, und dadurch, daß die Zuflußmessung zum Sammler der einzelnen Druckpumpen durch ein herkömmliches Solenoidventil, einen durch einen Elektromotor betriebenen Sperrhahn oder durch ein pneumatisches Ventil gesteuert wird, das durch ein Solenoidventil gesteuert wird.

12. Kompaktanlage, wie im Patentanspruch 11 beschrieben, die sich durch folgendes auszeichnet:
- ein erster Eingang des genannten Sammlers wird während der Waschphase betrieben, um den Durchfluß des entkalkten Wassers bei einer vorgegebenen Dosierung von Reinigungsmittel zu ermöglichen;
- ein zweiter Eingang wird während der Klarspülphase betrieben, um den Durchfluß des entkalkten und mikrogefilterten Wassers bei einer Temperatur zu ermöglichen, die der des Geräteraums (35) entspricht;
- ein dritter Eingang wird während einer weiteren Klarspülphase betrieben, um den Durchfluß des osmotisierten Wassers in Raumtemperatur zu ermöglichen;
- ein vierter Eingang ist über einen Druckschlauch an die Ausgangsleitung (8) einer Druckpumpe angeschlossen und verfügt über ein herkömmliches Druckventil, um einen unter Umständen am Pumpenausgang aufgetretenen Überdruck abzulassen.

13. Kompaktanlage, wie im Patentanspruch 8 beschrieben, die sich dadurch auszeichnet, daß der Geräteraum (35) eines oder mehrere der folgenden Bauteile aufweist: einen Dieseltank (1), einen Tank (2) mit osmotisiertem Wasser, einen Kamin (3) für die Abführung der Gase, einen Warmwasserspeicher (4), einen Boiler (5), einen Brenner (6), einen Wärmetauscher, einen Elektromotor (7), eine Druckpumpe (8), zwei Kationentauscher (9), einen Anionentauscher, einen Wassereinlaßfilter (10), ein Presostatventil am Leitungswassereinlaß, eine Osmoseanlage (11), einen Salztank (12), eine Dosierungspumpe für Reinigungsmittel (14), ein Schaltpaneel und ein in einem Schaltkasten (15) untergebrachtes Steuergerät.

14. Kompaktanlage, wie im Patentanspruch 13 beschrieben, die sich dadurch auszeichnet, daß sie außerdem eine Diebstahlwarnanlage aufweist.

15. Kompaktanlage, wie im Patentanspruch 13 beschrieben, die sich dadurch auszeichnet, daß sie außerdem eine Musikanlage aufweist.

16. Kompaktanlage, wie im Patentanspruch 13 beschrieben, die sich dadurch auszeichnet, daß sie außerdem über ein Heizsystem innerhalb des Geräteraums (35) verfügt sowie über ein System zur Entleerung der Flüssigkeit in den Rohren bzw. Schläuchen, die von Frostgefahr betroffen sind.

17. Kompaktanlage, wie im Patentanspruch 13 beschrieben, die sich dadurch auszeichnet, daß sie außerdem eine Zugangsklappe an den Wasserzufuhrkasten, den elektrischen Schaltkasten und die Drainagen aufweist.

18. Kompaktanlage, wie im Patentanspruch 1 beschrieben, die sich dadurch auszeichnet, daß der Geräteraum (35) sich neben dem Waschbereich befindet oder von diesem entfernt liegt und dadurch, daß der Geräteraum (35) mit dem Waschbereich über Wasserschläuche verbunden ist, die in der Lage sind, Wasser unter einem Druck zwischen 50 und 110 bar und bei einer Temperatur zwischen 40° und 90° C zu transportieren, wobei diese Schläuche mit einem ergonomischen Mundstück ausgestattet sind.

19. Kompaktanlage, wie im Patentanspruch 1 beschrieben, die sich dadurch auszeichnet, daß der Geräteraum (35) eine Zeitschaltuhr umfaßt, die zur Steuerung von verschiedenen im Inneren des Raums angebrachten Bauteilen dient.

20. Waschcenter, das eine der in den Patentansprüchen 1-19 beschriebenen Kompaktanlagen umfaßt und sich dadurch auszeichnet, daß seine Wachbereiche in einer oder mehreren der folgenden Bauweisen ausgeführt sind: Bereiche ohne Decke oder Wände, die über einen Wasserschlauch betrieben werden, der an Wasserrohre angeschlossen ist, die an der Decke des Geräteraums (35) befestigt sind; Bereiche mit Decke, aber ohne Wände, die über einen von der Decke herabhängenden Wasserschlauch betrieben werden; Bereiche mit Decke und Wänden, die über einen von der Decke herabhängenden Wasserschlauch betrieben werden; Bereiche, die räumlich vom Geräteraum (35) entfernt sind und mit einem 2 bis 6 Meter hohen Pfosten ausgestattet sind, dessen oberes Ende einen feststehenden Arm aufweist, aus dem der Wasserschlauch kommt.

21. Waschcenter, wie im Patentanspruch 20 beschrieben, das sich dadurch auszeichnet, daß die Betriebsdauer durch ein manuelles Mikroschaltersystem gesteuert wird, das sich in der durch Geldmünzen gesteuerten Vorrichtung (13) befindet bzw. das durch ein elektronisches Programm gesteuert wird, welches im Steuergerät abgespeichert ist, das sich innerhalb des Geräteraums (35) befindet.

22. Waschcenter, wie im Patentanspruch 20 bzw. 21 beschrieben, das sich dadurch auszeichnet, daß in der Waschstufe ein Reinigungsmittel verwendet wird, das in etwa folgende Zusammensetzung aufweist: 5% kalihaltiges Bleichmittel, 10% Triazin, 20% Aethylenglykol, 30% Triäthylamin und 35% Triäthylaminchlorid.

## Revendications

1. Installation compacte pour le lavage d'appareils comprenant :
une enceinte (35) pour les appareils à la forme compacte contenant un réservoir d'eau chaude, un réservoir de produit de nettoyage, une pompe foulante impulsée par un moteur électrique et les moyens nécessaires pour approvisionner l'eau chaude en produit de nettoyage;
une structure dans laquelle est logée cette enceinte pour les appareils et qui supporte de manière partielle ou totale les dispositifs externes pour faire le lavage;
des éléments externes fixés aux dispositifs externes déjà mentionnés comprenant un bras pivotant sur lequel est suspendu un tuyau à haute pression, une buse accouplée à ce tuyau dont la tuyère fournit l'eau de lavage et un dispositif (13) d'actionnement avec des pièces de monnaie, et
les moyens pour fournir par cette buse, au moins, deux types sélectionnés d'eau préparée pour répondre aux besoins des différentes étapes de lavage;
caractérisée par le fait que
ce dispositif (13) est un dispositif électronique actionné par des pièces de monnaie de type cumulatif, à monnaies multiples, comportant plusieurs boutons pour permettre à l'utilisateur de sélectionner le service de lavage souhaité, qui comprend quatre étapes différentes de lavage consistant en prélavage, lavage, rinçage et brillantage-séchage;
dans cette enceinte (35) se trouvent les moyens nécessaires pour les appareils de filtrage, de purification et de préparation de l'eau venant du réseau, pour l'adapter aux quatre étapes différentes de lavage;
cette enceinte (35) pour les appareils comprenant les moyens nécessaires pour permettre la manipulation en quatre zones de lavage indépendantes; et
il est associé à cette enceinte (35) pour les appareils une armoire de contrôle électrique (15) où se trouve une unité de contrôle électronique qui fonctionne individuellement pour chacune de ces zones indépendantes de lavage.

2. Installation compacte, selon la revendication 1, caractérisée par le fait que cette unité de contrôle électronique est pourvue d'une carte d'interface RS 232 pour transmettre et recevoir des données et des instructions.

3. Installation compacte, selon la revendication 2, caractérisée par le fait que cette unité de contrôle électronique gère le fonctionnement de chacun des éléments interne et externe de cette enceinte (35) pour les appareils et contrôle les avaries, les pannes et les niveaux de liquides consommables.

4. Installation compacte, selon la revendication 3, caractérisée par le fait que cette unité de contrôle électronique réalise, au moins, l'une des opérations suivantes :
gère le fonctionnement de chacun des éléments de cette enceinte pour appareils (35), compte le nombre d'unités payées dans l'une de ces quatre zones de lavage, gère les alarmes pour pannes correspondant à ces zones de lavage, réagit face à l'arrivée d'un signal d'alarme, et
cette unité de contrôle électronique est pourvue d'un modem pour recevoir de nouvelles instructions concernant les prix des services, l'envoi de données cumulées depuis le rapport précédent ou des données spécifiques.

5. Installation compacte, selon la revendication 1, caractérisée par le fait que cette enceinte (35) pour les appareils comprend quatre unités de pression compactes, comprenant chacune d'elles une pompe foulante (8) associée à un moteur à impulsion électrique correspondant (7), un régleur de débit et une pompe de dosage de détergent (14) pour le détergent nécessaire à l'étape de lavage, avec les connexions nécessaires entre ces dispositifs.

6. Installation compacte, selon la revendication 5, caractérisée par le fait que chacune de ces unités de pression compactes (7, 8, 14) est située sur un plateau démontable (16) et que ces plateaux (16) sont disposés sous forme d'empilement en parallèle.

7. Installation compacte, selon la revendication 1, caractérisée par le fait que cette enceinte (35) pour les appareils est située dans un corps cubique qui l'entoure, dont le plancher et les unions entre le plancher et les parois et entre les parois et le toit constituent une unité solidement jointe.

8. Installation compacte, selon la revendication 7, caractérisée par le fait que le toit de ce corps cubique qui l'entoure possède une armature pourvue de quatre platines, chacune ayant deux ou quatre orifices servant de points d'ancrage pour soulever l'ensemble du corps cubique qui l'entoure afin de déplacer l'installation à l'emplacement voulu.

9. Installation compacte, selon la revendication 7, caractérisée par le fait que ce corps cubique qui l'entoure a une porte (36) avec serrure, un éclairage intérieur et un espace intérieur suffisamment dégagé pour admettre la présence d'au moins deux personnes.

10. Installation compacte, selon la revendication 7, caractérisée par le fait que l'enceinte (35) pour les appareils se trouve dans une construction de 9 mètres cubes ou moins, ayant un plancher rectangulaire faisant environ 1 mètre 50 sur 2 mètres 50.

11. Installation compacte, selon la revendication 5, caractérisée par le fait que l'entrée de chacune des pompes foulantes (8) a un collecteur ayant au moins quatre entrées, chacune étant pourvue d'un régulateur de flux et une valve directionnelle ou anti-retour et que la mesure du flux vers le collecteur de chacune des pompes foulantes est contrôlée par une électrovanne conventionnelle, un robinet actionné par un moteur électrique ou une valve pneumatique, contrôlée par une électrovanne.

12. Installation compacte, selon la revendication 11, caractérisée par le fait que
- une première entrée de ce collecteur fonctionne pendant la phase de lavage, pour permettre le passage de l'eau chaude décalcifiée avec un dosage préétabli de détergent;
- une seconde entrée fonctionne pendant l'étape de rinçage, pour permettre le passage de l'eau décalcifiée et microfiltrée à une température adaptée à celle de l'enceinte (35) pour les appareils;
- une troisième entrée fonctionne pendant une autre étape de lavage pour permettre le passage de l'eau osmotisée à température ambiante;
- une quatrième entrée est branchée par un tuyau sous pression à la tuyauterie de sortie (8) d'une pompe foulante et possède une soupape de pression conventionnelle, afin de purger l'excès de pression de sortie de la pompe pouvant se produire pour des raisons accidentelles.

13. Installation compacte, selon la revendication 8, caractérisée par le fait que l'enceinte (35) pour les appareils contient un ou plusieurs éléments suivants : un réservoir de gasoil (1), un réservoir (2) d'eau osmotisée, une cheminée (3) pour l'évacuation des gaz, un accumulateur (4) d'eau chaude, un chauffe-eau (5), un brûleur (6), un échangeur de chaleur, un moteur électrique (7), une pompe foulante (8), deux échangeurs cationiques (9), un échangeur anionique, un filtre d'entrée d'eau (10), une soupape de réglage de pression à l'entrée de l'eau d'alimentation du réseau, une installation d'osmose (11), un réservoir de sels (12), une pompe de dosage de détergent (14), un tableau électrique et une unité de contrôle placée dans une armoire de contrôle (15).

14. Installation compacte, selon la revendication 13, caractérisée par le fait qu'elle comprend également une alarme de sécurité antivol.

15. Installation compacte, selon la revendication 13, caractérisée par le fait qu'elle comprend également un appareil de musique.

16. Installation compacte, selon la revendication 13, caractérisée par le fait qu'elle comprend également un système de chauffage dans l'enceinte (35) pour les appareils et un système de vidange de fluide dans les tubes ou tuyaux présentant un risque de congélation.

17. Installation compacte, selon la revendication 13, caractérisée par le fait qu'elle comprend également une trappe d'accès au caisson de fourniture d'eau, à la boîte de câbles électriques et aux éléments de vidange.

18. Installation compacte, selon la revendication 1, caractérisée par le fait que l'enceinte (35) pour les appareils se trouve près ou loin de la zone de lavage et que l'enceinte (35) pour les appareils se trouve en communication avec la zone de lavage par des tuyaux pouvant transporter l'eau sous une pression comprise entre 50 et 110 bars à une température comprise entre 40 et 90°C, ces tuyaux étant terminés par une buse ergonomique.

19. Installation compacte, selon la revendication 1, caractérisée par le fait que cette enceinte (35) pour les appareils comprend un temporisateur pour contrôler le fonctionnement de certains éléments installés à l'intérieur.

20. Centre de lavage, qui comprend une installation compacte, selon l'une des revendications 1-19, caractérisé par le fait que ses zones de lavage sont construites suivant une ou plusieurs alternatives suivantes : zones sans toit ou parois, dont le service est assuré par un tuyau provenant d'une structure tubulaire fixée sur le toit de l'enceinte (35) pour les appareils; des zones avec toit mais sans parois, dont le service est assuré par un tuyau provenant du toit; des zones avec toit et parois, dont le service est assuré par un tuyau provenant du toit; des zones éloignées de l'enceinte (35) pour les appareils et pourvues d'un poteau de 2 à 6 mètres de haut, dont l'extrémité supérieure possède un bras surélevé fixe d'où sort le tuyau de service.

21. Centre de lavage, selon la revendication 20, caractérisé par le fait que le temps d'utilisation du service est réglé par un système microrupteur manuel situé dans le dispositif (13) contrôlé par des pièces de monnaie ou par un programme électronique enregistré dans l'unité de contrôle située dans l'enceinte (35) pour les appareils.

22. Centre de lavage, selon la revendication 20 ou 21, caractérisé par le fait que l'étape de lavage d'appareils utilise un détergent composé approximativement par un blanchisseur potassique à 5%, 10% de triazine, 20% d'éthylèneglycol, 30% de triéthylamine et 35% de chlorure de triéthylamine.
